# EUROPEAN PATENT SPECIFICATION

(11) **EP 4 607 420 B1**
(45) Date of publication and mention of the grant of the patent: **19.08.2026**
(21) Application number: 25158244.1
(22) Date of filing: 17.02.2025
(51) Int. Cl.: G06Q 10/04, G06N 10/60, G06Q 10/047, G06Q 10/08

(54) **OPTIMAL ROUTE PLANNING AND VEHICLE CAPACITY UTILIZATION WITH MANAGEMENT OF INCOMPATIBLE COMMODITIES IN LOGISTICS**
OPTIMALE ROUTENPLANUNG UND FAHRZEUGKAPAZITÄTSNUTZUNG MIT VERWALTUNG INKOMPATIBLER WAREN IN DER LOGISTIK
PLANIFICATION D'ITINÉRAIRE OPTIMAL ET UTILISATION DE CAPACITÉ DE VÉHICULE AVEC GESTION DE MARCHANDISES INCOMPATIBLES EN LOGISTIQUE

(30) Priority: 23.02.2024 IN 202421013038
(43) Date of publication of application: 27.08.2025
(73) Proprietor: Tata Consultancy Services Limited, Maharashtra (IN)
(72) Inventor: RANA, Rahul, Kolkata 700160, West Bengal (IN); POOJARY, Sudhakara Deva, Thane 400607, Maharashtra (IN); SINHA, Aniket Sanjay, Kolkata 700156, West Bengal (IN); THINGBAIJAM, Rohit, Pune 411057, Maharashtra (IN)
(74) Representative: Goddar, Heinz J.

(56) References cited:
- US-A1- 2023 289 340
- RANA RAHUL ET AL: "Quantum Powered Employee Transport and Agri-Logistics Optimization", 2022 INTERNATIONAL CONFERENCE ON TRENDS IN QUANTUM COMPUTING AND EMERGING BUSINESS TECHNOLOGIES (TQCEBT), IEEE, 13 October 2022 (2022-10-13), pages 1 - 6, XP034296269, DOI: 10.1109/TQCEBT54229.2022.10041701
- JUAN FRANCISCO ARI\~NO SALES ET AL: "Adiabatic Quantum Computing for Logistic Transport Optimization", ARXIV.ORG, CORNELL UNIVERSITY LIBRARY, 201 OLIN LIBRARY CORNELL UNIVERSITY ITHACA, NY 14853, 18 January 2023 (2023-01-18), XP091417205

## Description

### CROSS-REFERENCE TO RELATED APPLICATIONS AND PRIORITY

The present application claims priority from Indian patent application no. 202421013038, filed on 23 February 2024.

### TECHNICAL FIELD

The embodiments herein generally relate to the field of automated logistics planning and, more particularly, to a method and system for optimal route planning and vehicle capacity utilization with management of incompatible commodities in logistics.

### BACKGROUND

In logistics use cases, it is perplexing to plan optimal route for the vehicles and optimal loading of commodities in the vehicles at the same time. There are systems that handle vehicle routing or vehicle loading problems individually. Simply combining these two systems does not help. This is because it leads to either routing to be performed better than optimal loading or vice versa. It also increased the number of variables and constraint equations in the optimization model which will result in more computational steps.

Logistics problems are NP-hard combinational optimization problems involving searching for the best solution in a large solution space. Recent studies have demonstrated the capability of quantum methods to solve such combinatorial optimization problems. However, as mentioned above, even while using quantum computing approaches, most of the existing systems either focus on route or capacity optimization. However, a common challenge in solving the above mentioned logistics problems is that the number of variables and number of constraints equations to be handled by quantum hybrid solvers are unnecessarily increased in the optimization model. Hence the number of computations increases, and it is not able to solve a large scale of the problem within a reasonable time. Thus, both the computation efficiency and time efficiency is low.

Further, logistics does not always deal with homogeneous commodities. However, handling of heterogeneous commodities, while considering the separation of incompatible commodities adds to the complexity of quantum hybrid solvers to provide feasible solutions.

### SUMMARY

Embodiments of the present disclosure present technological improvements as solutions to one or more of the above-mentioned technical problems recognized by the inventors in conventional systems.

For example, in one embodiment, a method for logistics planning is provided. The method includes splitting each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center.

Further the method includes clustering the plurality of nodes into a plurality of clusters based on geological distance among the nodes, wherein the clustering is performed if a number of plurality of nodes exceed a predefined node count, and wherein number of clusters is restricted by ratio of the number plurality of nodes to the predefined node count, and maximum nodes in a cluster are limited by the predefined node count.

Further the method includes assigning a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster.

Furthermore the method includes creating an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ, δ, η, ζ).

Further the method includes finding, using a Quantum hybrid solver an optimal route with optimal capacity utilization for each vehicle among the assigned set of vehicles within each cluster by solving the optimization model under a plurality of constraints to minimize the object value, wherein the optimal route specifies number of nodes to be visited and associated time steps for each vehicle for logistics planning.

In another aspect, a system for logistics planning is provided. The system comprises a classical computing system and a quantum computing system. The classical computing system comprising a memory storing instructions; one or more Input/Output (I/O) interfaces; and one or more hardware processors coupled to the memory via the one or more I/O interfaces, wherein the one or more hardware processors are configured by the instructions to split each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center.

Further the one or more hardware processor are configured to cluster the plurality of nodes into a plurality of clusters based on geological distance among the nodes, wherein the clustering is performed if a number of plurality of nodes exceed a predefined node count, and wherein number of clusters is restricted by ratio of the number plurality of nodes to the predefined node count, and maximum nodes in a cluster are limited by the predefined node count.

Further the one or more hardware processor are configured to assign a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster;

Furthermore the one or more hardware processor are configured to create an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ, δ, η, ζ).

Further the Quantum Processing Units (QPUs) of the quantum computing system are configured to use a Quantum hybrid solver to find an optimal route with optimal capacity utilization for each vehicle among the assigned set of vehicles within each cluster by solving the optimization model under a plurality of constraints to minimize the object value, wherein the optimal route specifies number of nodes to be visited and associated time steps for each vehicle for logistics planning.

In yet another aspect, there are provided one or more non-transitory machine-readable information storage mediums comprising one or more instructions, which when executed by one or more hardware processors causes a method for logistics planning.

The method includes splitting each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center.

Further the method includes clustering the plurality of nodes into a plurality of clusters based on geological distance among the nodes, wherein the clustering is performed if a number of plurality of nodes exceed a predefined node count, and wherein number of clusters is restricted by ratio of the number plurality of nodes to the predefined node count, and maximum nodes in a cluster are limited by the predefined node count.

Further the method includes assigning a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster.

Furthermore the method includes creating an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ, δ, η, ζ).

Further the method includes finding, using, a Quantum hybrid solver an optimal route with optimal capacity utilization for each vehicle among the assigned set of vehicles within each cluster by solving the optimization model under a plurality of constraints to minimize the object value, wherein the optimal route specifies number of nodes to be visited and associated time steps for each vehicle for logistics planning.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is an overview of a logistics environment deployed with a system for optimal route planning and vehicle capacity utilization with management of incompatible commodities in logistics, in accordance with some embodiments of the present disclosure.
FIG. 1B illustrates an architectural overview of the system of FIG. 1A, in accordance with some embodiments of the present disclosure.
FIG. 2 is a functional block diagram of the system of FIG. 1A and 1B for optimal route planning and vehicle capacity utilization with management of incompatible commodities in logistics, using the system depicted in FIG. 1A and 1B, in accordance with some embodiments of the present disclosure.
FIG. 3 is a flow diagram illustrating a method for optimal route planning and vehicle capacity utilization with management of incompatible commodities in logistics, using the system depicted in FIG. 1A, 1B, and FIG. 2, in accordance with some embodiments of the present disclosure.
FIG. 4A (prior art) is schematic depicting a standard vehicle route and capacity planning approach for transport of heterogenous, high volume commodities and FIG. 4B is a schematic depicting the method for optimal route planning and vehicle capacity utilization with management of incompatible commodities, in accordance with some embodiments of the present disclosure.
FIG. 5 is a flow diagram depicting customized K-means clustering nodes generated by splitting multiple pickup locations having heterogeneous commodities, in accordance with some embodiments of the present disclosure.
FIG. 6 is a flow diagram depicting vehicle assignment to each cluster, in accordance with some embodiments of the present disclosure.
FIGS. 7A through 7D is graphical depiction of optimization performance of the method and system for multiple performance metrics, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for optimal route planning and vehicle capacity utilization with management of incompatible commodities in logistics. To address the problem of high volume of commodities exceeding vehicle capacity at a given pickup location and need of separating incompatible commodities present at same pickup location across vehicles, the locations are split into nodes. Further, the multiple nodes are clustered using a customized clustering technique and a first level vehicle assignment is performed per cluster. Furthermore, with the created nodes and assigned vehicles per cluster an optimization model defined by an object value (O) is created for each cluster. It is solved using a quantum hybrid solver that minimizes the object value under defined constraints. Thus, the solution obtained provides an optimal route with optimal capacity utilization for each vehicle for each cluster.

One of inventor's published work titled *"*Quantum Powered Employee Transport and Agri-Logistics Optimization: by Rahul Rana et.al*.* addresses optimum utilization of vehicles and determines the optimal route for employee transportation/distribution of commodities to target locations by considering a wide range of constraints such as vehicle capacity constraints, depot constraints, and customer demands.

However, unlike the method disclosed herein the above work does not provide a splitting approach and fails to handle incompatible commodities present at a single location or presence of huge amount of commodities greater than the largest available vehicles.

Furthermore, the work does not refer to any cluster level vehicle assignment. The result of which is that the number of variables and number of constraints equations are unnecessarily increased in the optimization model for the above published work. This results in increased computation increases, which is a technical limitation for solving a large scale of the problem within a reasonable time.

As disclosed by the method, the first level vehicle assignment before creating the optimization model reduces the number of variables and constraint equations.

For example if the number of locations in one cluster = 10, and total available vehicles = 70. Then according to the above published work, the total number of variables = 10*10*70 + 70 = 7070. But, in the method disclosed herein, as a result of due vehicle assignment at cluster level, only assigned vehicles are used for withing cluster vehicle assignment for each node. For example, let the number of assigned vehicles for a cluster be 8. Then the total number of variables = 10*time_step*8 + 8 = 10*4*8+8 = 328. Where time_step = min(10, 10/8 + 2) = 4.

Furthermore, the above published work utilizes Density-based spatial clustering of applications with noise (DBSCAN) density based clustering, which has no control over the total number of elements (herein nodes) in each cluster, which results in uneven distribution of nodes among clusters. However, the method disclosed a customized K-means clustering technique that restricts nodes per cluster and number of clusters, resulting in capability to solve large scale of the problem with less execution.

In the cited work Quadratic Unconstrained binary optimization (QUBO) model is created before it solved by using quantum annealing. But QUBO model never guarantees the feasibility of the problem, and the result is that the prior work iterates over the solutions to get the feasible solution. But for the large scale of the problem it is not possible to find a feasible solution with this approach. However, the method disclosed herein does not require QUBO conversion as the optimization problem is refined before passing to the quantum hybrid solver in such a way that every time the system can get a feasible solution. This makes the method and system disclosed herein suitable for large scale vehicle route and capacity optimization problem.

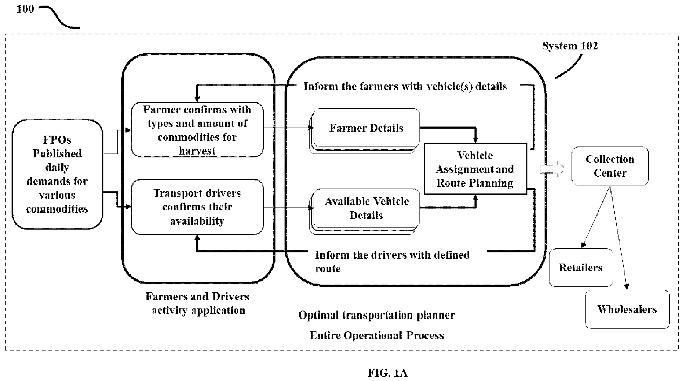

Referring now to the drawings, and more particularly to FIGS. 1A through 7D, where similar reference characters denote corresponding features consistently throughout the figures, there are shown preferred embodiments, and these embodiments are described in the context of the following exemplary system and/or method.

FIG. 1A is an overview of a logistics environment 100 deployed with a system 102 for optimal route planning and vehicle capacity utilization with management of incompatible commodities in logistics, in accordance with some embodiments of the present disclosure.

The logistic environment 100 and the system 102, that performs vehicle assignment and route planning, are explained using an example associated with logistics planning for farm produce. However, the example is not a limitation and the method and system disclosed herein can be applicable to other pickup and drop scenarios such as employee pick up drop, pickup and collection scenarios for ecommerce based entities and the like.

In the agriculture field, farm producer organizations (FPOs) are created with primary aim to establish transparency in operations like farm produce procurement and create wealth for farmers by adopting sustainable operational techniques. Large FPO aggregators, for example, have over 18,000 farmers across entire state spread across 250+ villages covering 30,000 acres of farming land producing multiple farm produces. A company that runs daily operations publishes the daily demand of farm crops to provide advance visibility to farmers. Farmers registered with the company provide, via a company portal, information on types and amount of commodities available for pickup by the company. Similarly, the transport owners also log in the vehicle availability, capacity, type etc., via the company portal. The above information, and prior obtained information such as farmer details, location details, vehicle details is processed by the system 102 to find an optimal route with optimal capacity utilization for each vehicle while picking up commodities and bringing them to a collection center. Once all commodities arrive, they are further distributed to retailers, wholesalers, and the like.

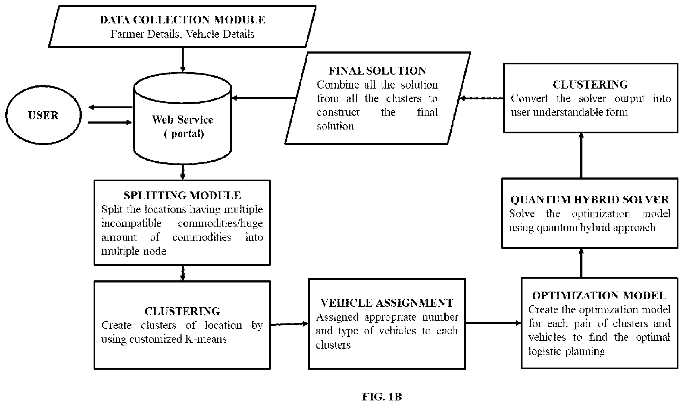

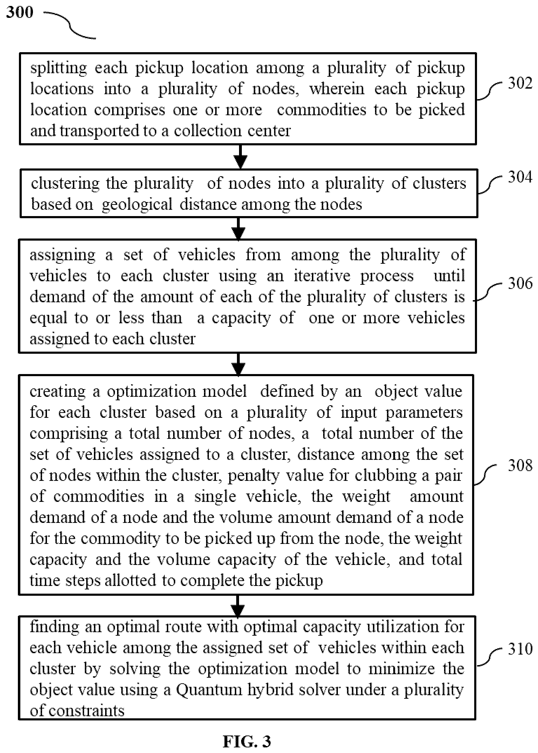

FIG. 1B illustrates an architectural overview of the system of FIG. 1A, in accordance with some embodiments of the present disclosure. FIG 1 B is explained in detail in conjunction with flow diagram of FIG. 3.

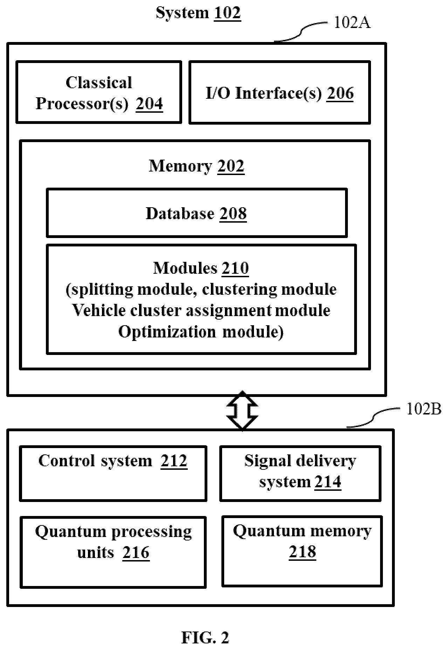

FIG. 2 is a functional block diagram of the system 102 of FIG. 1A and 1B for optimal route planning and vehicle capacity utilization with management of incompatible commodities in logistics, in accordance with some embodiments of the present disclosure. The system 100 includes a classical computing system 102A, a quantum computing system 102B and a communication interface 106.

In an embodiment, the classical computing system 102A includes a processor(s) 204, communication interface device(s), alternatively referred as input/output (I/O) interface(s) 206, and one or more data storage devices or a memory 202 operatively coupled to the processor(s) 204. The classical computing system 102A with one or more hardware processors is configured to execute functions of one or more functional blocks of the classical computing system 102A .

Referring to the components of classical computing system 102A, in an embodiment, the processor(s) 204, can be one or more hardware processors 204. In an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the classical computing system 102A can be implemented in a variety of computing systems including laptop computers, notebooks, hand-held devices such as mobile phones, workstations, mainframe computers, servers, and the like.

The I/O interface(s) 206 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices for end users such as farmers, vehicle owners to communicate with the classical computing system 102A .

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such a splitting module for splitting each location into nodes based on commodity amount and incompatible commodities to be picked up from the location, a clustering module to group the nodes into clusters, a vehicle cluster assignment module to assign vehicles per cluster, and an optimization module created per cluster based on requirements and setting of a plurality of input parameters.

The plurality of modules 210 include programs or coded instructions that supplement applications or functions performed by the system 100 for executing different steps involved in the process of logistics planning, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure. Further, the memory 102 includes a database 108. The database (or repository) 108 may include a plurality of abstracted pieces of code for refinement and data that is processed, received, or generated as a result of the execution of the plurality of modules in the module(s) 110.

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 2) and/or existing data may be modified and/or non-useful data may be deleted from the database. In one example, the data may be stored in an external system, such as a Lightweight Directory Access Protocol (LDAP) directory and a Relational Database Management System (RDBMS).

The quantum computing system 102B supports the execution of the quantum hybrid solver such as an annealing based quantum hybrid solver. The example quantum computing system 102B shown in FIG. 2 includes a control system 212, a signal delivery system 214, a plurality of Quantum Processing Units (QPUs) 216 and a quantum memory 218. The plurality of QPUs is unentangled and hence alternatively called the plurality of unentangled QPUs. The quantum computing system 102B may include additional or different features, and the components of a quantum computing system may operate as described with respect to FIG. 2 or in another manner.

The example quantum computing system 102B shown in FIG. 2 can perform quantum computational tasks (such as, for example, quantum simulations or other quantum computational tasks) by executing quantum algorithms such as herein an annealing based quantum hybrid solver. The Quantum annealing is a heuristic quantum optimization algorithm that can be used to solve combinatorial optimization problems. In some implementations, the quantum computing system 102B can perform quantum computation by storing and manipulating information within individual quantum states of a composite quantum system. For example, Qubits (i.e., Quantum bits) can be stored in and represented by an effective two-level sub-manifold of a quantum coherent physical system in the plurality of QPUs 216. In an embodiment, the quantum computing system 102B can operate using gate-based models for quantum computing. For example, the Qubits can be initialized in an initial state, and a quantum logic circuit comprised of a series of quantum logic gates can be applied to transform the qubits and extract measurements representing the output of the quantum computation. The example QPUs 216 shown in FIG.1 may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the QPUs 216. Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The QPUs 216 may be implemented using another type of physical system.

The example QPUs 216, and in some cases all or part of the quantum memory 218, can be maintained in a controlled cryogenic environment. The environment can be provided, for example, by shielding equipment, cryogenic equipment, and other types of environmental control systems. In some examples, the components in the QPUs 216 operate in a cryogenic temperature regime and are subject to very low electromagnetic and thermal noise. For example, magnetic shielding can be used to shield the system components from stray magnetic fields, optical shielding can be used to shield the system components from optical noise, thermal shielding and cryogenic equipment can be used to maintain the system components at controlled temperature, etc.

For example, the quantum memory 218 can receive control signals from the control system 212 and deliver the control signals to the QPUs 216. In some instances, the quantum memory 218 performs preprocessing, signal conditioning, or other operations to the control signals before delivering them to the QPUs 216. In an embodiment, the quantum memory 218 includes connectors or other hardware elements that transfer signals between the QPUs 216 and the control system 212. For example, the connection hardware can include signal lines, signal processing hardware, filters, feedthrough devices (e.g., light-tight feedthroughs, etc.), and other types of components. In some implementations, the connection hardware can span multiple different temperature and noise regimes. For example, the connection hardware can include a series of temperature stages that decrease between a higher temperature regime (e.g., at the control system 212) and a lower temperature regime (e.g., at the QPUs 216).

In the example quantum computer system 102B shown in FIG. 2, the control system 212 controls operation of the QPUs 216. The example control system 212 may include data processors, signal generators, interface components and other types of systems or subsystems. Components of the example control system 212 may operate in a room temperature regime, an intermediate temperature regime, or both. For example, the control system 212 can be configured to operate at much higher temperatures and be subject to much higher levels of noise than are present in the environment of the QPUs 216. In some embodiments, the control system 212 includes a classical computing system that executes software to compile instructions for the QPUs 216. For example, the control system 212 may decompose a quantum logic circuit or quantum computing program into discrete control operations or sets of control operations that can be executed by the hardware in the QPUs 216. In some examples, the control system 212 applies a quantum logic circuit by generating signals that cause the Qubit devices and other devices in the QPUs 216 to execute operations. For instance, the operations may correspond to single-Qubit gates, two-Qubit gates, Qubit measurements, etc. The control system 212 can generate control signals that are communicated to the QPUs 216 by the quantum memory 218, and the devices in the QPUs 216 can execute the operations in response to the control signals.

In some other embodiments, the control system 212 includes one or more classical computers or classical computing components that produce a control sequence, for instance, based on a quantum computer program to be executed. For example, a classical processor may convert a quantum computer program to an instruction set for the native gate set or architecture of the QPUs 216. In some cases, the control system 212 includes a microwave signal source (e.g., an arbitrary waveform generator), a bias signal source (e.g., a direct current source) and other components that generate control signals to be delivered to the QPUs 216. The control signals may be generated based on a control sequence provided, for instance, by a classical processor in the control system 212. The example control system 212 may include conversion hardware that digitizes response signals received from the QPUs 216. The digitized response signals may be provided, for example, to a classical processor in the control system 212.

In some embodiments, the quantum computer system 104 includes multiple quantum information processors that operate as respective quantum processor units (QPU). In some cases, each QPU can operate independent of the others. For instance, the quantum computer system 102B may be configured to operate according to a distributed quantum computation model, or the quantum computer system 104 may utilize multiple QPUs in another manner. In some implementations, the quantum computer system 102B includes multiple control systems, and each QPU may be controlled by a dedicated control system. In some implementations, a single control system can control multiple QPUs; for instance, the control system 212 may include multiple domains that each control a respective QPU. In some instances, the quantum computing system 102B uses multiple QPUs to execute multiple unentangled quantum computations (e.g., multiple Variational Quantum Eigen solver (VQE)) that collectively simulate a single quantum mechanical system.

In an embodiment, the quantum memory 214 is a quantum-mechanical version of classical computer memory. The classical computer memory stores information such as binary states and the quantum memory 214 stores a quantum state for later retrieval. These states hold useful computational information known as Qubits. In an embodiment, the communication (I/O) interface 206, which connects the classical computing system 102A and the quantum computing system 102B is a high speed digital interface.

Functions of the components of the system 102 are now explained with reference to steps of flow diagrams in FIG. 3 through FIG. 7B.

FIG. 3 is a flow diagram illustrating a method 300 for optimal route planning and vehicle capacity utilization with management of incompatible commodities in logistics, using the system depicted in FIG. 1A, 1B, and FIG. 2, in accordance with some embodiments of the present disclosure.

In an embodiment, the system 102 comprises the classical computing system 102A with one or more data storage devices or the memory 202 operatively coupled to the processor(s) 204, and the quantum computing system 102B and is configured to store instructions for execution of steps of the method 300 by the processor(s) or one or more hardware processors 204 and the QPUs 212. The steps of the method 300 of the present disclosure will now be explained with reference to the components or blocks of the system 102 as depicted in FIG. 1A 1B, FIG. 2, and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

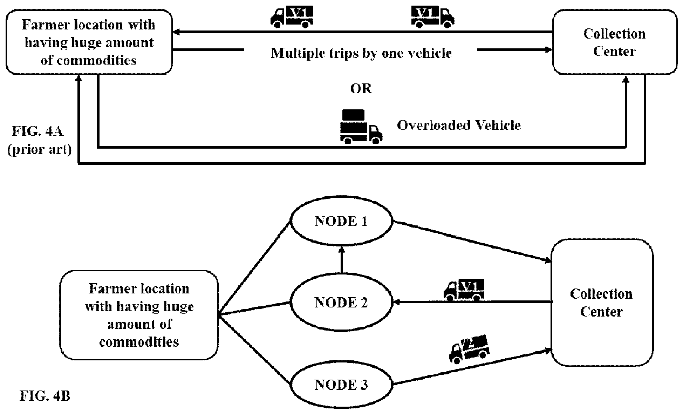

Referring to the steps of the method 300, at step 302 of the method 300, the one or more hardware processors 204 are configured by the instructions to split each pickup location among a plurality of pickup locations into a plurality of nodes. Each pickup location comprises one or more commodities to be picked and transported to a collection center. The splitting is determined based on (i) number of incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center. As depicted in FIG. 4A, conventional logistics planning may use overloading or multiple trips (repeat trips) by same vehicle for addressing maximum vehicle capacity limit and incompatible commodities problem, which may not be an optimal solution.

There exist certain challenges in logistics planning, for the same reason the method introduces the step of splitting the location by generating nodes. Usually, when a farmer has a huge amount of commodities greater than the capacity of the largest vehicle available, then the standard route planner of FIG. 4A assigns multiple trips to that farmer to collect that farm produce, this may result in extra distance travelled which increase the transportation cost and will lead to fatigue of the drivers. Or to handle the situation they may overload the vehicle which breaks the transportation laws. Further, there might be some commodities with a farmer which cannot be loaded in a single vehicle. This might reduce the quality of these farm produce. Multiple crops may be harvested by a single farmer. Multiple crops harvested by a single farmer may be in-compatible to load in same truck *[ 'Onion and Lettuce', 'Onion and Tomato (which is stocked in crates)'.*

As depicted in the flow diagram of FIG. 4B, the splitting in performed as follows:
1. Split the location based on type of commodities, e.g. A farmer may have 3 different crops (commodities that are incompatible) available. So, that location is treated as having three splits.
2. If the amount (weight and volume) of a commodity exceeds median capacity (weight and volume) of all vehicles, the total splits is given by the formula: $\begin{matrix}no . of splits = \\ \left⌈\frac{commodity amount}{median capacity of all vehicles \left(M\right)}\right⌉\end{matrix}$ $The amount of commodities in each split = \frac{commodity amount}{no . of splits}$

Using the median of all the vehicle capacities to calculate the number of splits and amount (weight amount and volume amount) of commodities in each split provides a unique approach. It can be noted that, if the smallest vehicle capacity is used for splitting, then the number of splits formed is very high. This results in an increased number of variables and constraint equations in the optimization model, which increases computational steps to find optimal planning. Similarly, if the largest capacity of vehicle is used to form splits, then the number of splits will be minimum but the amount of commodity in each split will be large and cannot be carried by small capacity vehicles.

Once the pickup locations are spilt into a plurality of nodes based on the requirement, at step 304 of the method 300, the one or more hardware processors 204 are configured by the instructions to cluster the plurality of nodes into a plurality of clusters based on geological distance among the nodes. The clustering is performed if a number of plurality of nodes exceed a predefined node count (C). The value of C is derived from the capacity of the quantum hybrid solver to handle a number of variables to provide a solution in reasonable time. The same is explained below.

The annealing based quantum hybrid solver used herein can solve a problem up to a maximum of 500,000 variables in a reasonable time. Thus the pre-defined value of C is derived in such a way that total number of variables should not exceed the limit of 500,000 variables. Assuming the extreme scenario where all the vehicles are used to create the optimization model then,
the maximum number of variables = *M* × *N² + M = M*(*N²* + 1), where *N =* total number of nodes, M = total number of vehicles

That means to get a solution in reasonable time: $M \left({N}^{2}+1\right) \leq 500000$ ${N}^{2} + 1 \leq \frac{500000}{M}$ $N \leq \left⌊\sqrt{\left(\frac{500000}{M}-1\right)}\right⌋$ $N \leq C , where , C = \left⌊\sqrt{\left(\frac{500000}{M}-1\right)}\right⌋$

Now, if *N* ≤ C the clustering module is not performed.
**Example1:** let *N = 90, M =* 100 $Then , C = \left⌊\sqrt{\left(\frac{500000}{100}-1\right)}\right⌋ = \left⌊70.7\right⌋ = 70 ,$ Check the condition *N* ≤ *C*. $N \left(=90\right) > C \left(=70\right) ,$ Condition failed hence it will create multiple clusters with maximum node per cluster (C) = 70.
**Example 2:** *N =* 90, *M =* 55

Then, $C = \left⌊\sqrt{\left(\frac{500000}{55}-1\right)}\right⌋ = \left⌊95.34\right⌋ = 95$. Since *N* ≤ *C* only one cluster is going to be created.

The clustering technique used is a customized K-means approach that is based on certain condition checks, wherein the number of clusters is restricted by ratio of the number plurality of nodes to the predefined node count, and maximum nodes in a cluster are limited by the predefined node count.

Clustering is done based on near proximity of locations (geological distance). Each cluster can contain heterogeneous types of farm produce. The customized K-Means technique. This is because, in well-known vanilla K-means clustering, user has to provide the number of clusters as an input and user does not have any control of the maximum number of elements in each cluster. This may result in uneven distribution of locations among the clusters. For example, if 5 clusters are created for 100 locations using vanilla K-Means then it might happen that one cluster is assigned 80 locations and the remaining are assigned with 10, 4, 3, 3. So, the largest cluster does not address the purpose of clustering. So, a check criteria to set a limit on the number of locations in each cluster and thus decide the number of clusters by using the formula specified in equation 4 below.

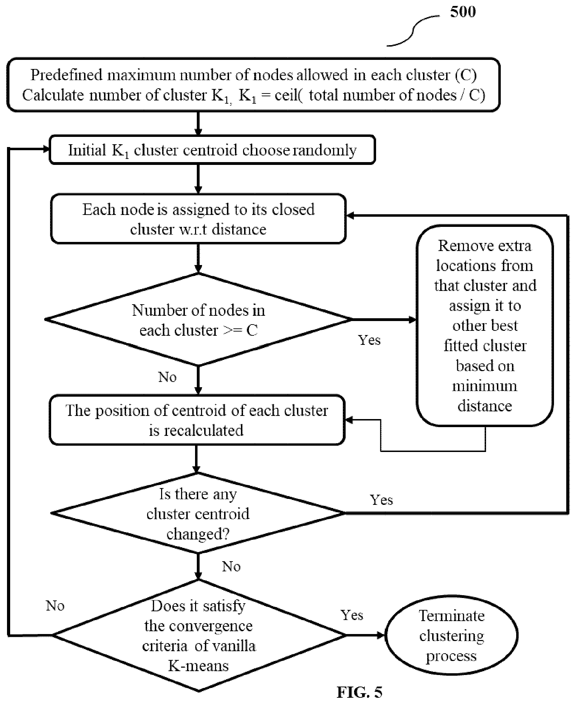

The clustering performed at step 304 is explained in conjunction with a flow diagram 500 of FIG. 5. Clustering is performed only if the total number of locations > C (where C is a pre-defined positive integer determined by the predefined node count). Finding optimal solution for N (>C) number of locations is not possible within the reasonable time.

The technical reasoning and significance of clustering approach is applied by the method 300 is explained below:
For an optimization model and used herein, let:
Total number of available vehicles = M
Total number of nodes ( set of nodes generated post splitting of the locations) = N1 $\begin{matrix}Then the total number of variables in the optimization model \\ = {MN}_{1}^{2} + M\end{matrix}$
The number of variables increases quadratically with respect to number of locations *N*₁. The number of constraint equations for the first two set of constraints increases linearly with the number of locations. Thus, the method 300 divides the set of nodes into multiple clusters and perform the optimization model for each cluster.

As mentioned earlier, in vanilla K-means clustering, the number of clusters need to be provided as a manual input and further, the user does not have any control of the maximum number of elements ( herein nodes) in each cluster. This may result in uneven distribution of locations among the clusters. Thus, the method utilizes use below mathematical formula of equation 4 to find the number of cluster and keep a check on the number of elements in each cluster. $Number of clusters = \left⌈\frac{{N}_{1}}{C}\right⌉$

As discussed, the maximum number of nodes allowed in each cluster which is C. Now to even distribution of all nodes we need proper number of clusters, which is why we divide the total number of nodes (*N*₁) by maximum number of nodes allowed in each cluster (*C*). And we used ceiling function to get the nearest integer larger than $\frac{{N}_{1}}{C}$.

Example: Let *N₁* = 100, C = 9 then number of $clusters = \left⌈\frac{100}{9}\right⌉ = \left⌈11.11\right⌉ = 12$ We need at least 12 clusters for the even distribution of node.The check criteria is introduced to modify the vanilla K-means to the customized K-means to check that number of nodes in each cluster should be ≤C.

Upon generation of clusters, at step 306 of the method 300, the one or more hardware processors 204 are configured by the instructions to assign a set of vehicles from among the plurality of vehicles to each cluster using an iterative process until demand of the amount of each of the plurality of clusters is equal to or less than a capacity of one or more vehicles assigned to each cluster. The iterative process as is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster.

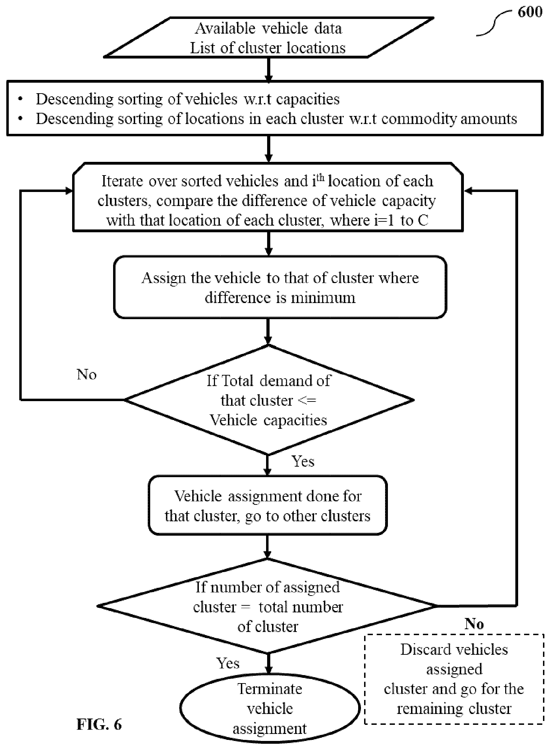

The iterative vehicle assignment process of step 306 is explained in conjunction with a flow diagram 600 of FIG. 6. Vehicle assignments to each cluster is a challenge. If a simple logic of sequentially selecting the clusters and assigning vehicles from the pool of all available vehicles is applied, then there may be a case in which the last few clusters in the sequence can be assigned with remaining vehicles of small capacities. So, a large number of small vehicles are utilized to serve those clusters, that increases the travelled distance, transportation cost and CO2 emissions. To address this, the method, at step 306, instead of looking at the clusters sequentially all the cluster and all the available vehicles are considered at a glance and then appropriately the vehicles are distributed to the clusters as per their requirements.

Referring to the equation 3, Number of variables in the optimization model increases linearly with number of vehicles. The number of constraint equations in the last 3 set of constraints increases linearly with the number of vehicles. So, an appropriate subset of vehicles is assigned to each cluster. The steps of vehicle assignment include:
1. Sort the vehicles in descending order by capacity and group them on the basis of vehicle types. And store the count of each vehicle type.
2. Sort the locations in each cluster in decreasing order by commodity demands.
3. Iterate over sorted vehicles and *i^{th}*locations of each cluster, compare the difference of vehicle capacity with that location of each cluster. Where, i = 1 to C.
4. Assign the vehicle to the cluster with minimum difference.
5. If total demand of that cluster <= assign vehicle capacities, then the clustering terminates, else repeat step 3 to 5.

Once the clusters are generated, at step 308 of the method 300, the one or more hardware processors 204 are configured by the instructions to create the optimization model defined by an object value (O) for each cluster. The optimization model is built based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities. The object value is defined by summation of a plurality of decision variables (α, β, γ, δ, η, ζ).

In logistics use cases, it is perplexing to plan optimal route for the vehicles and optimal loading of commodities in the vehicles at the same time. There are existing systems that handle vehicle routing or vehicle loading problems individually. Simply combining these two systems does not help. This is because it leads either routing to be performed better than optimal loading or vice versa. It also increases the number of variables and constraint equations in the optimization model which will result in more computational steps. These existing systems also do not handle cases for which multiple vehicle assignment is required for a single location which has dissonant (incompatible) commodities or commodities of amount larger than largest capacity of the vehicle.

The disclosed optimization model handles of both optimal route planning and optimal vehicle capacity utilization, with heterogeneous commodities, along with the separation of incompatible commodities in different vehicles, using a smaller number of variables and constraint equations, resulting in less use of computational resources.

**Input Parameters for the optimization model:**
- N = Total number of Nodes.
   [ **Node:** Node is defined as location having single commodity (or one mor more compatible commodities that can be stacked together in single vehicle), and its amount is less than median value ( 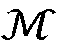 ). A location is split into multiple nodes (as mentioned earlier) if it has multiple commodities, or the amount of commodities is more than the median value( 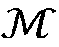 ). Multiple nodes may refer to a single location.]
- M = Total number of vehicles
- C_{i,j}= Distance between i^{th} node and j^{th} node
- S_{j,l} = Penalty value for clubbing a pair of commodities in a single vehicle. [Penalty has a value of 1 if the clubbing is allowed, else the penalty value is 100 times the largest input parameter]
- wᵢ = Weight demand of i^{th} node
- vᵢ = Volume demand of i^{th} node
- Wi = Weight capacity of i^{th} vehicle
- Vi = Volume demand of i^{th} vehicle
- T = Total time steps
The decision variable is assumed as mentioned below: $. {x}_{i , j , k} = \left\{\begin{matrix}1 & if {i}^{th} vehicle is in {j}^{th} node at the {k}^{th} time - step \\ 0 & Otherwise\end{matrix}\right.$ Where, *i* ∈ {1,2,*...M*}, *j* ∈ {1,2,...*N*}*and k* ∈
{1,2*,...T*}. *The maximum time - step T is evaluated as follows:* $T = min \left\{N,\frac{N}{M}+L\right\}$
*^{y}i* = 1, if *i^{th}* vehicle is used else, 0.
The goal of the optimization model is to minimize the below objective value (O). $Minimize O = α + β + γ + δ + η + ζ$ $α = {\sum }_{m = 1}^{M} {\sum }_{n = 1}^{N} {C}_{0 , n} {x}_{m , n , 1}$
This expression represents the sum of distances travelled by all vehicles from the collection centre to the first node in their respective routes. $β = {\sum }_{m = 1}^{M} {\sum }_{n = 1}^{N} {C}_{n , 0} {x}_{m , n , T}$
This represents the sum of distances travelled by all vehicles from the last node of its route to the collection centre. $γ = {\sum }_{m = 1}^{M} {\sum }_{n = 1}^{T - 1} {\sum }_{i = 0}^{N} {\sum }_{j = 0}^{N} {C}_{i , j} {x}_{m , i , n} {x}_{m , j , n} {x}_{m , j , n + 1}$
The above expression represents the sum of distances travelled by all vehicles in the intermediate timesteps. $δ = {\sum }_{i = 1}^{M} {\sum }_{l = 1}^{N} {\sum }_{j = 1 , j \neq l}^{N} {\sum }_{m = 1}^{T} {\sum }_{k = 1}^{T} {S}_{j , l} {x}_{i , j , k} {x}_{i , l , m}$
In the above expression, the penalty value is high for incompatible items in the same vehicle. So, the optimization model tries to make the δ = 0. This possible only when *x_{i,j,k}x_{i,l,m}* = 0. It implies that both variables cannot be simultaneously = 1 or in other words, the vehicle will not pick incompatible goods from nodes j and l. $η = {\sum }_{i = 1}^{M} \left({y}_{i}\times {W}_{i}-{\sum }_{j = 0}^{N} {\sum }_{k = 1}^{T} {w}_{j} \times {x}_{i , j , k}\right)$ $ζ = {\sum }_{i = 1}^{M} \left({y}_{i}\times {V}_{i}-{\sum }_{j = 0}^{N} {\sum }_{k = 1}^{T} {v}_{j} \times {x}_{i , j , k}\right)$
To maximize the vehicle capacity utilization, we minimize the empty space of the selected vehicles. The above two expressions manage that for weight and volumetric capacity.

### Plurality of Constraints:

- Separation constraint: Two or multiple incompatible commodities should not be transported together in a single vehicle. This is handled by expression *δ* in the objective function. ${\sum }_{i = 1}^{M} {\sum }_{k = 1}^{T} {x}_{i , j , k} = 1 , ∀$
Every node (other than the collection center) is served by exactly one vehicle at exactly one time instant. The above expression handles it because sum of binary variables (*x_{i,j,k}*) is 1 implies exactly one binary variable number should be 1. ${\sum }_{j = 1}^{N} {x}_{i , j , k} = 1 , ∀ i , k$ A vehicle can be at only one place at any given timestep. This is because a vehicle cannot be in two different nodes at a time instant. ${\sum }_{j = 0}^{N} {\sum }_{k = 1}^{T} {w}_{j} {x}_{i , j , k} \leq {W}_{i} , ∀$ ${\sum }_{j = 0}^{N} {\sum }_{k = 1}^{T} {v}_{j} {x}_{i , j , k} \leq {V}_{i} , ∀ i$ Vehicle Capacity constraint: The above two expressions make sure that the total commodity amount (weight and volume) carried by a vehicle in its entire route does not exceed its capacity. ${x}_{i , j , k} \leq {y}_{i} ∀ i , k and ∀ j ∈ N \ \left\{0\right\}$ This makes sure that for a particular vehicle i, if *x_{i,j,k} =* 1 i.e. *j^{th}* node is served by vehicle i then vehicle i should be selected i.e. *yᵢ* = 1

Once the optimization module is created for each cluster, then at step 310 of the method 300, the QBUs 212 are configured to find an optimal route with optimal capacity utilization for each vehicle among the assigned set of vehicles within each cluster by solving the optimization model under a plurality of constraints to minimize the object value using the Quantum hybrid solver. The optimal route specifies the number of nodes to be visited and associated time steps for each vehicle for logistics planning.

The quantum hybrid solver, for example, can be annealing based quantum hybrid solver. The Quantum annealing is a heuristic quantum optimization algorithm that can be used to solve combinatorial optimization problems. Quantum annealing is a notion used by quantum annealers, and it works on the principle of adiabatic theorem known in the literature. The problem is mapped so that it can be easily encoded into qubits and gradually evolved (annealed) to the optimal (or near optimal) state under the influence of a magnetic field. At the end of this process, the quantum annealer outputs a distribution of results with different probabilities. To get the desired answer, it has to be iterated multiple times. The solution to the problem is the result with the highest probability. For example, D-Wave Annealer^{™} employs quantum annealing to compute the minimum of an energy landscape defined by the biases and couplings applied to its qubits as a Hamiltonian (work in literature).

The output of the optimization variables is converted into user understandable format and communicated to the end user such as the farmer and the driver of the vehicle or vehicle owner (e.g. locations visited by a vehicle, type of commodity and their amount loaded in each vehicle, total distance covered by a vehicle).

Examples below explain how the output of quantum hybrid solver is utilized to generate information for end users.
Let, Number of nodes N = 4 (including collection center),
Number of vehicles = 3, time_step = 4
Then in the optimization model the one set of decision variables (4*4*3 = 48 variables) are ,*x*_{1,0,2}, ..., *x*_{3,3,4} and another set of 3 decision variables are *y*₁, *y*₂, *y*₃.
Now after solving the model using quantum hybrid solver we will get the values (0 or 1) of the decision variables.
Let the output solution of the quantum hybris solver be:
   *y*₁ = 1, indicates vehicle 1 is used,
   *y*₂ = 1 (vehicle 2 is used),
   *y*₃ = 0 indicates vehicle 3 is not used.
   *x*₁₁₁ = 1, indicates vehicle 1 is at node 1 at time-step 1
   *x*₁₃₂ = 1, indicates vehicle 1 is at node 3 at time-step 2
Therefore, the route of vehicle 1 is:$" collection centre > > node 1 > > node 3 > > collection centre " .$" ".
Total load and volume carried by vehicles 1 is sum of all weights and volumes available in node 1, node 3, node 2. By using details of each node, system 102 returns the type of commodities carried by vehicle 1. *x*₂₃₁ = 1, That is vehicle 2 is at node 3 at time-step 1
Therefore, the route of vehicle 2 is: $" collection centre > > node 3 > > collection centre . "$

Table below, split as Table 1A and Table 1B due to space constraints, depicts performance comparison between existing state of the art system vs system 102. Table 1A and Table 1B depicts result using the system 102 tested for 7 days. The performance evaluation is based on the metrics that includes, total number of vehicles used, vehicle loading capacity utilization, vehicle volumetric capacity utilization, total travelled distance (kms), % reduction in travelled distance.

**Table 1**

| **#Far mer locations** | **Total weight of the commodities (kgs)** | **Total Volume of the commodities (cft)** | **Total number of vehicle used** | | **Total vehicle loading capacity (kgs)** | | **Total vehicle volumetric capacity (cft)** | |
|---|---|---|---|---|---|---|---|---|
| | | | **Existing Approach** | **System 102** | **Existing Approach** | **System 102** | **Existing Approach** | **System 102** |
| 108 | 377364 | 39518.83 | 102 | 86 | 459500 | 424500 | 58791.74 | 52668.45 |
| 96 | 333663 | 37829.71 | 88 | 75 | 423500 | 371500 | 62615.81 | 55651.53 |
| 103 | 341932 | 38406.24 | 90 | 76 | 433000 | 376000 | 68509.69 | 59665.68 |
| 82 | 269529 | 31735.19 | 71 | 63 | 341500 | 313500 | 55409.26 | 48299.91 |
| 87 | 294212 | 33571.63 | 80 | 70 | 386000 | 345000 | 57184.17 | 51258.24 |
| 91 | 326834 | 36187.24 | 76 | 73 | 367000 | 360500 | 58661.54 | 53284.38 |
| 57 | 191716 | 21384.81 | 53 | 49 | 251500 | 243000 | 37241.71 | 33614.29 |

**Table 1B**

| **Vehicle loading capacity utilization** | | **Vehicle volumetric capacity utilization** | | **Total travelled distance (kms)** | | **Reduction in travelled distance (kms)** | **Percentage reduction in travelled distance** |
|---|---|---|---|---|---|---|---|
| **Existing Approach** | **System 102** | **Existing Approach** | **System 102** | **Existing Approach** | **System 102** | | |
| 82.12% | 88.90 % | 67.22% | 75.03 % | 4066.54 | 3861.56 | 204.98 | 5.04 |
| 78.79% | 89.82 % | 60.42% | 67.98 % | 4703.09 | 4321.84 | 381.25 | 8.11 |
| 78.97% | 90.94 % | 56.06% | 64.37 % | 3959.94 | 3457.71 | 502.23 | 12.68 |
| 78.93% | 85.97 % | 57.27% | 65.7% | 2915.91 | 2667.85 | 248.06 | 8.51 |
| 76.22% | 85.28 % | 58.71% | 65.5% | 5725.71 | 5235.03 | 490.68 | 8.57 |
| 89.06% | 90.66 % | 61.69% | 67.91 % | 3584.98 | 3502.9 | 82.08 | 2.29 |
| 76.23% | 78.90 % | 57.42% | 63.62 % | 2178.31 | 1974.75 | 203.56 | 9.34 |

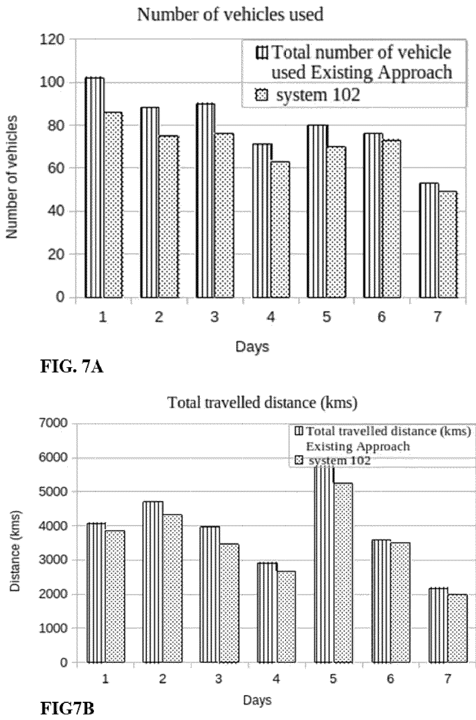

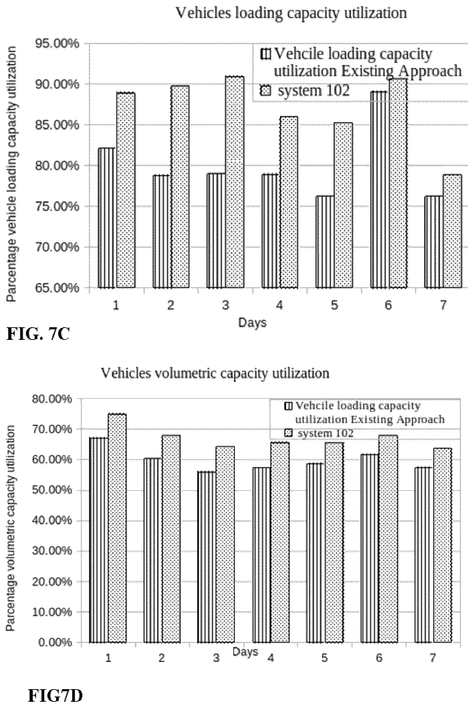

FIG. 7A indicates that the system 102 used less number of vehicles than the current existing approach. FIG. 7B indicates that total travelled distance, when the system 102 is used, is less for each day compared to the current existing approach. FIG. 7C shows that percentage vehicle loading capacity utilization by the system 102 is more than the percentage vehicle loading capacity utilization in existing approach. FIG. 7D shows that percentage vehicle volumetric capacity utilization by the system 102 is more than the percentage vehicle volumetric capacity utilization in existing approach.

The system 102 thus provides effective resource utilization of transport vehicles, in turn providing a cost efficient and time efficient logistics planning. The method and system disclosed herein provides both optimal route planning and optimal vehicle capacity utilization, with heterogeneous commodities, along with the separation of incompatible commodities in different vehicles, using a smaller number of variables and constraint equations, resulting in less use of computational resources.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for logistics planning, the method comprising:
splitting (302), by one or more hardware processors of a classical computing system, each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of the incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center;
clustering (304), by the one or more hardware processors, the plurality of nodes into a plurality of clusters based on geological distance among the nodes, wherein the clustering is performed if a number of the plurality of nodes exceed a predefined node count, and wherein number of clusters is restricted by ratio of the number of the plurality of nodes to the predefined node count, and maximum nodes in a cluster are limited by the predefined node count;
assigning (306), by the one or more hardware processors, a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster;
creating (308), by the one or more hardware processors, an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ , δ, η, ζ); and
finding (310), an optimal route with optimal capacity utilization for each vehicle among the assigned set of vehicles within each cluster by solving the optimization model under a plurality of constraints to minimize the object value using a Quantum hybrid solver executed by a Quantum Processing Units (QPUs) of a quantum computing system, wherein the optimal route specifies number of nodes to be visited and associated time steps for each vehicle for logistics planning.

2. The processor implemented method as claimed in claim 1, wherein the Quantum hybrid solver minimizes the object value each of the plurality of decision variables (α, β, γ , δ, η, ζ), and wherein
α represents a sum of distances travelled by each vehicle of the set of vehicles from a collection centre to a first node in respective routes of each vehicle;
β represents the sum of distances travelled by each vehicle from the last node of the respective route to the collection centre;
γ represents the sum of distances travelled by each vehicle in the intermediate timesteps;
δ represents penalty term updated by the penalty value based on whether the compatible commodities or the incompatible commodities are paired in a single vehicle, wherein the penalty value is to '1' for compatible commodities that are allowed for clubbing and set to 100 times the largest input parameter, wherein the Quantum hybrid solver, to minimize the object value maintains value of δ equal to '0' enabling only compatible commodities to be clubbed in the single vehicle; and
η represents weight capacity of the vehicle and ζ represents capacity volume metric of the capacity of the vehicle which together decide the reduction of empty space in the single vehicle.

3. The processor implemented method as claimed in claim 1, wherein the plurality of constraints comprises:
two or more incompatible commodities should not be transported together in a single vehicle;
every node is served by exactly one vehicle at exactly one time step;
a vehicle can be at only one place at any given timestep; and
a total commodity amount in terms of weight and volume carried by a vehicle in its entire route does not exceed its capacity.

4. A system (102) for logistics planning, the system (102) comprising:
a classical computing system (102A) a memory (202) storing instructions;
one or more Input/Output (I/O) interfaces (206); and
one or more hardware processors (204) coupled to the memory (202) via the one or more I/O interfaces (206); and
a quantum computing system (102B) coupled to the classical computing system (102A) comprising Quantum Processing Units (QPUs),
wherein the one or more hardware processors (204) are configured by the instructions to:
split each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center;
cluster the plurality of nodes into a plurality of clusters based on geological distance among the nodes, wherein the clustering is performed if a number of the plurality of nodes exceed a predefined node count, and wherein number of clusters is restricted by ratio of the number of the plurality of nodes to the predefined node count, and maximum nodes in a cluster are limited by the predefined node count;
assign a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster;
create an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ, δ, η, ζ); and
wherein the QPUs, executing a Quantum hybrid solver is configured to:
find an optimal route with optimal capacity utilization for each vehicle among the assigned set of vehicles within each cluster by solving the optimization model under a plurality of constraints to minimize the object value, wherein the optimal route specifies number of nodes to be visited and associated time steps for each vehicle for logistics planning.

5. The system as claimed in claim 4, wherein the Quantum hybrid solver minimizes the object value each of the plurality of decision variables (α, β, γ, δ, η, ζ), and wherein
α represents a sum of distances travelled by each vehicle of the set of vehicles from a collection centre to a first node in respective routes of each vehicle;
β represents the sum of distances travelled by each vehicle from the last node of the respective route to the collection centre;
γ represents the sum of distances travelled by each vehicle in the intermediate timesteps;
δ represents penalty term updated by the penalty value based on whether compatible or incompatible commodities are paired in a single vehicle, wherein the penalty value is to '1' for compatible commodities that are allowed for clubbing and set to 100 times the largest input parameter, wherein the Quantum hybrid solver, to minimize the object value maintains value of δ equal to '0' enabling only compatible commodities to be clubbed in the single vehicle; and
η represents weight capacity of the vehicle and ζ represents capacity volume metric of the capacity of the vehicle which together decide the reduction of empty space in the single vehicle.

6. The system as claimed in claim 4, wherein the plurality of constraints comprises:
two or more incompatible commodities should not be transported together in a single vehicle;
every node is served by exactly one vehicle at exactly one time step;
a vehicle can be at only one place at any given timestep; and
a total commodity amount in terms of weight and volume carried by a vehicle in its entire route does not exceed its capacity.

7. One or more non-transitory machine-readable information storage mediums comprising one or more instructions which when executed by one or more hardware processors of a classical computing system in combination with Quantum Processing Units cause:
splitting each pickup location among a plurality of pickup locations into a plurality of nodes, wherein each pickup location comprises commodities with a combination of compatible commodities and incompatible commodities to be picked and transported to a collection center, and wherein the splitting is determined based on (i) number of the incompatible commodities at the pickup location, (ii) an amount of commodity comprising a weight amount and a volume amount at each location, and (iii) a median capacity in terms of a weight capacity and a volume capacity of a plurality of vehicles registered for transport to the collection center;
clustering the plurality of nodes into a plurality of clusters based on geological distance among the nodes, wherein the clustering is performed if a number of the plurality of nodes exceed a predefined node count, and wherein number of clusters is restricted by ratio of the number of the plurality of nodes to the predefined node count, and maximum nodes in a cluster are limited by the predefined node count;
assigning a set of vehicles from among the plurality of vehicles to each cluster using an iterative process until demand of the amount of each of the plurality of clusters is equal to or less than a capacity of one or more vehicles assigned to each cluster, the iterative process is applied on (i) the plurality of vehicles arranged in descending order of the capacity comprising the weight capacity and the volume capacity, (ii) the plurality of nodes of each of the plurality of clusters arranged in descending order of the amount of the one or more commodities at each node among the plurality of nodes a market demand of the one or more commodities available at each of node, and (iv) a difference between the capacity of the vehicle and amount of the one or more commodities at each of the set of nodes in each cluster;
creating an optimization model defined by an object value (O) for each cluster based on a plurality of input parameters comprising a total number of nodes, a total number of the set of vehicles assigned to a cluster, distance among the set of nodes within the cluster, penalty value for clubbing a pair of commodities in a single vehicle, the weight amount demand of a node and the volume amount demand of a node for the commodity to be picked up from the node, the weight capacity and the volume capacity of the vehicle, and total time steps allotted to complete the pickup of the plurality of commodities, wherein the object value is defined by summation of a plurality of decision variables (α, β, γ , δ, η, ζ); and
finding an optimal route with optimal capacity utilization for each vehicle among the assigned set of vehicles within each cluster by solving the optimization model under a plurality of constraints to minimize the object value using a Quantum hybrid solver executed by a Quantum Processing Units (QPUs) of a quantum computing system, wherein the optimal route specifies number of nodes to be visited and associated time steps for each vehicle for logistics planning.

8. The one or more non-transitory machine-readable information storage mediums as claimed in claim 7, wherein the Quantum hybrid solver minimizes the object value each of the plurality of decision variables (α, β, γ , δ, η, ζ), and wherein
α represents a sum of distances travelled by each vehicle of the set of vehicles from a collection centre to a first node in respective routes of each vehicle;
β represents the sum of distances travelled by each vehicle from the last node of the respective route to the collection centre;
γ represents the sum of distances travelled by each vehicle in the intermediate timesteps;
δ represents penalty term updated by the penalty value based on whether the compatible commodities or the incompatible commodities are paired in a single vehicle, wherein the penalty value is to '1' for compatible commodities that are allowed for clubbing and set to 100 times the largest input parameter, wherein the Quantum hybrid solver, to minimize the object value maintains value of δ equal to '0' enabling only compatible commodities to be clubbed in the single vehicle; and
η represents weight capacity of the vehicle and ζ represents capacity volume metric of the capacity of the vehicle which together decide the reduction of empty space in the single vehicle.

9. The one or more non-transitory machine-readable information storage mediums as claimed in claim 7, wherein the plurality of constraints comprises:
two or more incompatible commodities should not be transported together in a single vehicle;
every node is served by exactly one vehicle at exactly one time step;
a vehicle can be at only one place at any given timestep; and
a total commodity amount in terms of weight and volume carried by a vehicle in its entire route does not exceed its capacity.

## Patentansprüche

1. Prozessorimplementiertes Verfahren (300) zur Logistikplanung, wobei das Verfahren Folgendes umfasst:
Aufteilen (302), durch einen oder mehrere Hardwareprozessoren eines klassischen Rechensystems, jedes Abholorts unter einer Mehrzahl von Abholorten in eine Mehrzahl von Knoten, wobei jeder Abholort Waren mit einer Kombination aus kompatiblen Waren und inkompatiblen Waren umfasst, die abzuholen und zu einem Sammelzentrum zu transportieren sind, und wobei das Aufteilen auf der Grundlage (i) der Anzahl der inkompatiblen Waren am Abholort, (ii) einer Menge an Waren, die eine Gewichtsmenge und eine Volumenmenge an jedem Ort umfasst, und (iii) einer mittleren Kapazität in Form einer Gewichtskapazität und einer Volumenkapazität einer Mehrzahl von Fahrzeugen, die für den Transport zum Sammelzentrum registriert sind, bestimmt wird;
Clustern (304), durch den einen oder die mehreren Hardwareprozessoren, der Mehrzahl von Knoten in eine Mehrzahl von Clustern auf der Grundlage eines geologischen Abstands zwischen den Knoten, wobei das Clustern durchgeführt wird, wenn eine Anzahl der Mehrzahl von Knoten eine vordefinierte Knotenanzahl überschreitet, und wobei die Anzahl von Clustern durch das Verhältnis der Anzahl der Mehrzahl von Knoten zur vordefinierten Knotenanzahl beschränkt ist und maximale Knoten in einem Cluster durch die vordefinierte Knotenanzahl begrenzt sind;
Zuweisen (306), durch den einen oder die mehreren Hardwareprozessoren, eines Satzes von Fahrzeugen unter der Mehrzahl von Fahrzeugen zu jedem Cluster unter Verwendung eines iterativen Prozesses, bis die Nachfrage nach der Menge jedes der Mehrzahl von Clustern gleich oder kleiner als eine Kapazität eines oder mehrerer Fahrzeuge ist, die jedem Cluster zugewiesen sind, wobei der iterative Prozess auf (i) die Mehrzahl von Fahrzeugen, die in absteigender Reihenfolge der Kapazität angeordnet sind, die die Gewichtskapazität und die Volumenkapazität umfasst, (ii) die Mehrzahl von Knoten jedes der Mehrzahl von Clustern, die in absteigender Reihenfolge der Menge der einen oder der mehreren Waren an jedem Knoten unter der Mehrzahl von Knoten angeordnet sind, eine Marktnachfrage der einen oder der mehreren Waren, die an jedem der Knoten verfügbar sind, und (iv) eine Differenz zwischen der Kapazität des Fahrzeugs und der Menge der einen oder der mehreren Waren an jedem des Satzes von Knoten in jedem Cluster angewendet wird;
Erzeugen (308), durch den einen oder die mehreren Hardwareprozessoren, eines Optimierungsmodells, das durch einen Objektwert (O) für jedes Cluster auf der Grundlage einer Mehrzahl von Eingabeparametern definiert ist, die eine Gesamtanzahl von Knoten, eine Gesamtanzahl des Satzes von Fahrzeugen, die einem Cluster zugewiesen sind, einen Abstand zwischen dem Satz von Knoten innerhalb des Clusters, einen Strafwert für das Vereinen eines Paares von Waren in einem einzelnen Fahrzeug, die Nachfrage nach der Gewichtsmenge eines Knotens und die Nachfrage nach der Volumenmenge eines Knotens für die vom Knoten abzuholende Ware, die Gewichtskapazität und die Volumenkapazität des Fahrzeugs und Gesamtzeitschritte, die zum Abschließen der Abholung der Mehrzahl von Waren zugewiesen sind, umfassen, wobei der Objektwert durch Summieren einer Mehrzahl von Entscheidungsvariablen (α, (3, γ , δ, η, ζ) definiert ist; und
Finden (310) einer optimalen Route mit optimaler Kapazitätsnutzung für jedes Fahrzeug unter dem zugewiesenen Satz von Fahrzeugen innerhalb jedes Clusters durch Lösen des Optimierungsmodells unter einer Mehrzahl von Randbedingungen, um den Objektwert unter Verwendung eines Quantenhybridlösers zu minimieren, der von Quantenverarbeitungseinheiten (QPUs) eines Quantenrechensystems ausgeführt wird, wobei die optimale Route die Anzahl von zu besuchenden Knoten und zugehörige Zeitschritte für jedes Fahrzeug zur Logistikplanung spezifiziert.

2. Prozessorimplementiertes Verfahren nach Anspruch 1, wobei der Quantenhybridlöser den Objektwert jeder der Mehrzahl von Entscheidungsvariablen (α, β, γ , δ, η, ζ) minimiert, und wobei
α eine Summe von Abständen darstellt, die von jedem Fahrzeug des Satzes von Fahrzeugen von einem Sammelzentrum zu einem ersten Knoten in jeweiligen Routen jedes Fahrzeugs zurückgelegt werden;
β die Summe von Abständen darstellt, die von jedem Fahrzeug vom letzten Knoten der jeweiligen Route zum Sammelzentrum zurückgelegt werden;
γ die Summe von Abständen darstellt, die von jedem Fahrzeug in den Zwischenzeitschritten zurückgelegt werden;
δ einen Strafterm darstellt, der durch den Strafwert basierend darauf aktualisiert wird, ob die kompatiblen Waren oder die inkompatiblen Waren in einem einzelnen Fahrzeug gepaart sind, wobei der Strafwert für kompatible Waren, die zum Vereinen zugelassen sind, auf "1" ist und auf das 100-fache des größten Eingabeparameters eingestellt ist, wobei der Quantenhybridlöser, um den Objektwert zu minimieren, den Wert von δ gleich "0" beibehält, was ermöglicht, dass nur kompatible Waren in dem einzelnen Fahrzeug vereint werden; und
η die Gewichtskapazität des Fahrzeugs darstellt und ζ die Kapazitätsvolumenmetrik der Kapazität des Fahrzeugs darstellt, die zusammen die Verringerung von Leerraum in dem einzelnen Fahrzeug entscheiden.

3. Prozessorimplementiertes Verfahren nach Anspruch 1, wobei die Mehrzahl von Beschränkungen Folgendes umfasst:
zwei oder mehr inkompatible Waren sollten nicht zusammen in einem einzelnen Fahrzeug transportiert werden;
jeder Knoten wird von genau einem Fahrzeug in genau einem Zeitschritt bedient;
ein Fahrzeug kann sich in jedem gegebenen Zeitschritt an nur einem Ort befinden; und
eine Gesamtmenge an Waren in Bezug auf Gewicht und Volumen, die von einem Fahrzeug auf seiner gesamten Route mitgeführt werden, überschreitet seine Kapazität nicht.

4. System (102) zur Logistikplanung, wobei das System (102) Folgendes umfasst:
ein klassisches Rechensystem (102A), einen Speicher (202), der Anweisungen speichert;
eine oder mehrere Eingabe/Ausgabe(E/A)-Schnittstellen (206); und
einen oder mehrere Hardwareprozessoren (204), die über die eine oder die mehreren E/A-Schnittstellen (206) mit dem Speicher (202) gekoppelt sind; und
ein Quantenrechensystem (102B), das mit dem klassischen Rechensystem (102A) gekoppelt ist, das Quantenverarbeitungseinheiten (QPUs) umfasst,
wobei der eine oder die mehreren Hardwareprozessoren (204) durch die Anweisungen konfiguriert sind zum:
Aufteilen jedes Abholorts unter einer Mehrzahl von Abholorten in eine Mehrzahl von Knoten, wobei jeder Abholort Waren mit einer Kombination aus kompatiblen Waren und inkompatiblen Waren umfasst, die abzuholen und zu einem Sammelzentrum zu transportieren sind, und wobei das Aufteilen auf der Grundlage (i) der Anzahl der inkompatiblen Waren am Abholort, (ii) einer Menge an Waren, die eine Gewichtsmenge und eine Volumenmenge an jedem Ort umfasst, und (iii) einer mittleren Kapazität in Form einer Gewichtskapazität und einer Volumenkapazität einer Mehrzahl von Fahrzeugen, die für den Transport zum Sammelzentrum registriert sind, bestimmt wird;
Clustern der Mehrzahl von Knoten in eine Mehrzahl von Clustern auf der Grundlage eines geologischen Abstands zwischen den Knoten, wobei das Clustern durchgeführt wird, wenn eine Anzahl der Mehrzahl von Knoten eine vordefinierte Knotenanzahl überschreitet, und wobei die Anzahl von Clustern durch das Verhältnis der Anzahl der Mehrzahl von Knoten zur vordefinierten Knotenanzahl beschränkt ist und maximale Knoten in einem Cluster durch die vordefinierte Knotenanzahl begrenzt sind;
Zuweisen eines Satzes von Fahrzeugen unter der Mehrzahl von Fahrzeugen zu jedem Cluster unter Verwendung eines iterativen Prozesses, bis die Nachfrage nach der Menge jedes der Mehrzahl von Clustern gleich oder kleiner als eine Kapazität eines oder mehrerer Fahrzeuge ist, die jedem Cluster zugewiesen sind, wobei der iterative Prozess auf (i) die Mehrzahl von Fahrzeugen, die in absteigender Reihenfolge der Kapazität angeordnet sind, die die Gewichtskapazität und die Volumenkapazität umfasst, (ii) die Mehrzahl von Knoten jedes der Mehrzahl von Clustern, die in absteigender Reihenfolge der Menge der einen oder der mehreren Waren an jedem Knoten unter der Mehrzahl von Knoten angeordnet sind, eine Marktnachfrage der einen oder der mehreren Waren, die an jedem der Knoten verfügbar sind, und (iv) eine Differenz zwischen der Kapazität des Fahrzeugs und der Menge der einen oder der mehreren Waren an jedem des Satzes von Knoten in jedem Cluster angewendet wird;
Erzeugen eines Optimierungsmodells, das durch einen Objektwert (O) für jedes Cluster auf der Grundlage einer Mehrzahl von Eingabeparametern definiert ist, die eine Gesamtanzahl von Knoten, eine Gesamtanzahl des Satzes von Fahrzeugen, die einem Cluster zugewiesen sind, einen Abstand zwischen dem Satz von Knoten innerhalb des Clusters, einen Strafwert für das Vereinen eines Paares von Waren in einem einzelnen Fahrzeug, die Nachfrage nach der Gewichtsmenge eines Knotens und die Nachfrage nach der Volumenmenge eines Knotens für die vom Knoten abzuholende Ware, die Gewichtskapazität und die Volumenkapazität des Fahrzeugs und Gesamtzeitschritte, die zum Abschließen der Abholung der Mehrzahl von Waren zugewiesen sind, umfassen, wobei der Objektwert durch Summieren einer Mehrzahl von Entscheidungsvariablen (α, β, γ, δ, η, ζ) definiert ist; und
wobei die QPUs, die einen Quanten-Hybrid-Solver ausführen, konfiguriert sind zum:
Finden einer optimalen Route mit optimaler Kapazitätsnutzung für jedes Fahrzeug unter dem zugewiesenen Satz von Fahrzeugen innerhalb jedes Clusters durch Lösen des Optimierungsmodells unter einer Mehrzahl von Randbedingungen, um den Objektwert zu minimieren, wobei die optimale Route die Anzahl von zu besuchenden Knoten und zugehörige Zeitschritte für jedes Fahrzeug zur Logistikplanung spezifiziert.

5. System nach Anspruch 4, wobei der Quantenhybridlöser den Objektwert jeder der Mehrzahl von Entscheidungsvariablen (α, β, γ, δ, η, ζ) minimiert, und wobei
α eine Summe von Abständen darstellt, die von jedem Fahrzeug des Satzes von Fahrzeugen von einem Sammelzentrum zu einem ersten Knoten in jeweiligen Routen jedes Fahrzeugs zurückgelegt werden;
β die Summe von Abständen darstellt, die von jedem Fahrzeug vom letzten Knoten der jeweiligen Route zum Sammelzentrum zurückgelegt werden;
γ die Summe von Abständen darstellt, die von jedem Fahrzeug in den Zwischenzeitschritten zurückgelegt werden;
δ einen Strafterm darstellt, der durch den Strafwert basierend darauf aktualisiert wird, ob kompatible oder inkompatible Waren in einem einzelnen Fahrzeug gepaart sind, wobei der Strafwert für kompatible Waren, die zum Vereinen zugelassen sind, auf "1 " ist und auf das 100-fache des größten Eingabeparameters eingestellt ist, wobei der Quantenhybridlöser, um den Objektwert zu minimieren, den Wert von δ gleich "0" beibehält, was ermöglicht, dass nur kompatible Waren in dem einzelnen Fahrzeug vereint werden; und
η die Gewichtskapazität des Fahrzeugs darstellt und ζ die Kapazitätsvolumenmetrik der Kapazität des Fahrzeugs darstellt, die zusammen die Verringerung von Leerraum in dem einzelnen Fahrzeug entscheiden.

6. System nach Anspruch 4, wobei die Mehrzahl von Beschränkungen Folgendes umfasst:
zwei oder mehr inkompatible Waren sollten nicht zusammen in einem einzelnen Fahrzeug transportiert werden;
jeder Knoten wird von genau einem Fahrzeug in genau einem Zeitschritt bedient;
ein Fahrzeug kann sich in jedem gegebenen Zeitschritt an nur einem Ort befinden; und
eine Gesamtmenge an Waren in Bezug auf Gewicht und Volumen, die von einem Fahrzeug auf seiner gesamten Route mitgeführt werden, überschreitet seine Kapazität nicht.

7. Ein oder mehrere nichtflüchtige maschinenlesbare Informationsspeichermedien, die eine oder mehrere Anweisungen umfassen, die, wenn sie von einem oder mehreren Hardwareprozessoren eines klassischen Rechensystems in Kombination mit Quantenverarbeitungseinheiten ausgeführt werden, Folgendes bewirken:
Aufteilen jedes Abholorts unter einer Mehrzahl von Abholorten in eine Mehrzahl von Knoten, wobei jeder Abholort Waren mit einer Kombination aus kompatiblen Waren und inkompatiblen Waren umfasst, die abzuholen und zu einem Sammelzentrum zu transportieren sind, und wobei das Aufteilen auf der Grundlage (i) der Anzahl der inkompatiblen Waren am Abholort, (ii) einer Menge an Waren, die eine Gewichtsmenge und eine Volumenmenge an jedem Ort umfasst, und (iii) einer mittleren Kapazität in Form einer Gewichtskapazität und einer Volumenkapazität einer Mehrzahl von Fahrzeugen, die für den Transport zum Sammelzentrum registriert sind, bestimmt wird;
Clustern der Mehrzahl von Knoten in eine Mehrzahl von Clustern auf der Grundlage eines geologischen Abstands zwischen den Knoten, wobei das Clustern durchgeführt wird, wenn eine Anzahl der Mehrzahl von Knoten eine vordefinierte Knotenanzahl überschreitet, und wobei die Anzahl von Clustern durch das Verhältnis der Anzahl der Mehrzahl von Knoten zur vordefinierten Knotenanzahl beschränkt ist und maximale Knoten in einem Cluster durch die vordefinierte Knotenanzahl begrenzt sind;
Zuweisen eines Satzes von Fahrzeugen unter der Mehrzahl von Fahrzeugen zu jedem Cluster unter Verwendung eines iterativen Prozesses, bis die Nachfrage nach der Menge jedes der Mehrzahl von Clustern gleich oder kleiner als eine Kapazität eines oder mehrerer Fahrzeuge ist, die jedem Cluster zugewiesen sind, wobei der iterative Prozess auf (i) die Mehrzahl von Fahrzeugen, die in absteigender Reihenfolge der Kapazität angeordnet sind, die die Gewichtskapazität und die Volumenkapazität umfasst, (ii) die Mehrzahl von Knoten jedes der Mehrzahl von Clustern, die in absteigender Reihenfolge der Menge der einen oder der mehreren Waren an jedem Knoten unter der Mehrzahl von Knoten angeordnet sind, eine Marktnachfrage der einen oder der mehreren Waren, die an jedem der Knoten verfügbar sind, und (iv) eine Differenz zwischen der Kapazität des Fahrzeugs und der Menge der einen oder der mehreren Waren an jedem des Satzes von Knoten in jedem Cluster angewendet wird;
Erzeugen eines Optimierungsmodells, das durch einen Objektwert (O) für jedes Cluster auf der Grundlage einer Mehrzahl von Eingabeparametern definiert ist, die eine Gesamtanzahl von Knoten, eine Gesamtanzahl des Satzes von Fahrzeugen, die einem Cluster zugewiesen sind, einen Abstand zwischen dem Satz von Knoten innerhalb des Clusters, einen Strafwert für das Vereinen eines Paares von Waren in einem einzelnen Fahrzeug, die Nachfrage nach der Gewichtsmenge eines Knotens und die Nachfrage nach der Volumenmenge eines Knotens für die vom Knoten abzuholende Ware, die Gewichtskapazität und die Volumenkapazität des Fahrzeugs und Gesamtzeitschritte, die zum Abschließen der Abholung der Mehrzahl von Waren zugewiesen sind, umfassen, wobei der Objektwert durch Summieren einer Mehrzahl von Entscheidungsvariablen (α, β, γ , δ, η, ζ) definiert ist; und
Finden einer optimalen Route mit optimaler Kapazitätsnutzung für jedes Fahrzeug unter dem zugewiesenen Satz von Fahrzeugen innerhalb jedes Clusters durch Lösen des Optimierungsmodells unter einer Mehrzahl von Randbedingungen, um den Objektwert unter Verwendung eines Quantenhybridlösers zu minimieren, der von Quantenverarbeitungseinheiten (QPUs) eines Quantenrechensystems ausgeführt wird, wobei die optimale Route die Anzahl von zu besuchenden Knoten und zugehörige Zeitschritte für jedes Fahrzeug zur Logistikplanung spezifiziert.

8. Ein oder mehrere nichtflüchtige maschinenlesbare Informationsspeichermedien nach Anspruch 7, wobei der Quantenhybridlöser den Objektwert jeder der Mehrzahl von Entscheidungsvariablen (α, β, γ , δ, η, ζ) minimiert, und wobei
α eine Summe von Abständen darstellt, die von jedem Fahrzeug des Satzes von Fahrzeugen von einem Sammelzentrum zu einem ersten Knoten in jeweiligen Routen jedes Fahrzeugs zurückgelegt werden;
β die Summe von Abständen darstellt, die von jedem Fahrzeug vom letzten Knoten der jeweiligen Route zum Sammelzentrum zurückgelegt werden;
γ die Summe von Abständen darstellt, die von jedem Fahrzeug in den Zwischenzeitschritten zurückgelegt werden;
δ einen Strafterm darstellt, der durch den Strafwert basierend darauf aktualisiert wird, ob die kompatiblen Waren oder die inkompatiblen Waren in einem einzelnen Fahrzeug gepaart sind, wobei der Strafwert für kompatible Waren, die zum Vereinen zugelassen sind, auf "1" ist und auf das 100-fache des größten Eingabeparameters eingestellt ist, wobei der Quantenhybridlöser, um den Objektwert zu minimieren, den Wert von δ gleich "0" beibehält, was ermöglicht, dass nur kompatible Waren in dem einzelnen Fahrzeug vereint werden; und
η die Gewichtskapazität des Fahrzeugs darstellt und ζ die Kapazitätsvolumenmetrik der Kapazität des Fahrzeugs darstellt, die zusammen die Verringerung von Leerraum in dem einzelnen Fahrzeug entscheiden.

9. Ein oder mehrere nichtflüchtige maschinenlesbare Informationsspeichermedien nach Anspruch 7, wobei die Mehrzahl von Beschränkungen Folgendes umfasst:
zwei oder mehr inkompatible Waren sollten nicht zusammen in einem einzelnen Fahrzeug transportiert werden;
jeder Knoten wird von genau einem Fahrzeug in genau einem Zeitschritt bedient;
ein Fahrzeug kann sich in jedem gegebenen Zeitschritt an nur einem Ort befinden; und
eine Gesamtmenge an Waren in Bezug auf Gewicht und Volumen, die von einem Fahrzeug auf seiner gesamten Route mitgeführt werden, überschreitet seine Kapazität nicht.

## Revendications

1. Procédé mis en œuvre par processeur (300) pour la planification logistique, le procédé comprenant :
la division (302), par un ou plusieurs processeurs matériels d'un système informatique classique, de chaque emplacement de ramassage parmi une pluralité d'emplacements de ramassage en une pluralité de noeuds, dans lequel chaque emplacement de ramassage comprend des marchandises avec une combinaison de marchandises compatibles et de marchandises incompatibles devant être ramassées et transportées vers un centre de collecte, et dans lequel la division est déterminée sur la base (i) du nombre des marchandises incompatibles au niveau de l'emplacement de ramassage, (ii) d'une quantité de marchandise comprenant une quantité de poids et une quantité de volume au niveau de chaque emplacement, et (iii) d'une capacité médiane en termes de capacité de poids et de capacité de volume d'une pluralité de véhicules immatriculés pour le transport vers le centre de collecte ;
le regroupement (304), par les un ou plusieurs processeurs matériels, de la pluralité de noeuds en une pluralité de grappes sur la base d'une distance géologique parmi les noeuds, dans lequel le regroupement est effectué si un nombre de la pluralité de noeuds dépasse un nombre de noeuds prédéfini, et dans lequel le nombre de grappes est limité par un rapport du nombre de la pluralité de noeuds au nombre de noeuds prédéfini, et des noeuds maximaux dans une grappe sont limités par le nombre de noeuds prédéfini ;
l'attribution (306), par les un ou plusieurs processeurs matériels, d'un ensemble de véhicules parmi la pluralité de véhicules à chaque grappe en utilisant un processus itératif jusqu'à ce qu'une demande de la quantité de chacune de la pluralité de grappes soit égale ou inférieure à une capacité d'un ou plusieurs véhicules attribués à chaque grappe, le processus itératif est appliqué sur (i) la pluralité de véhicules agencés dans un ordre décroissant de la capacité comprenant la capacité de poids et la capacité de volume, (ii) la pluralité de noeuds de chacune de la pluralité de grappes agencés dans un ordre décroissant de la quantité des une ou plusieurs marchandises au niveau de chaque noeud parmi la pluralité de noeuds, d'une demande de marché des une ou plusieurs marchandises disponibles au niveau de chacun des noeuds, et (iv) d'une différence entre la capacité du véhicule et la quantité des une ou plusieurs marchandises au niveau de chacun de l'ensemble de noeuds dans chaque grappe ;
la création (308), par les un ou plusieurs processeurs matériels, d'un modèle d'optimisation défini par une valeur d'objet (O) pour chaque grappe sur la base d'une pluralité de paramètres d'entrée comprenant un nombre total de noeuds, un nombre total de l'ensemble de véhicules attribués à une grappe, une distance parmi l'ensemble de noeuds à l'intérieur de la grappe, une valeur de pénalité pour le groupement d'une paire de marchandises dans un seul véhicule, la demande de quantité de poids d'un noeud et la demande de quantité de volume d'un noeud pour la marchandise devant être ramassée à partir du noeud, la capacité de poids et la capacité de volume du véhicule, et des étapes de temps totales allouées pour achever le ramassage de la pluralité de marchandises, dans lequel la valeur d'objet est définie par la sommation d'une pluralité de variables de décision (α, β, γ , δ, η, ζ) ; et
la recherche (310), d'un itinéraire optimal avec une utilisation de capacité optimale pour chaque véhicule parmi l'ensemble attribué de véhicules à l'intérieur de chaque grappe en résolvant le modèle d'optimisation sous une pluralité de contraintes pour minimiser la valeur d'objet en utilisant un résolveur hybride quantique exécuté par des unités de traitement quantique (QPU) d'un système informatique quantique, dans lequel l'itinéraire optimal spécifie un nombre de noeuds devant être visités et des étapes de temps associées pour chaque véhicule pour la planification logistique.

2. Procédé mis en œuvre par processeur selon la revendication 1, dans lequel le résolveur hybride quantique minimise la valeur d'objet de chacune de la pluralité de variables de décision (α, β, γ , δ, η, ζ), et dans lequel
α représente une somme de distances parcourues par chaque véhicule de l'ensemble de véhicules d'un centre de collecte à un premier noeud dans des itinéraires respectifs de chaque véhicule ;
β représente la somme de distances parcourues par chaque véhicule du dernier noeud de l'itinéraire respectif au centre de collecte ;
y représente la somme de distances parcourues par chaque véhicule dans les étapes de temps intermédiaires ;
δ représente un terme de pénalité mis à jour par la valeur de pénalité selon que les marchandises compatibles ou les marchandises incompatibles sont appariées dans un seul véhicule, dans lequel la valeur de pénalité est fixée à « 1 » pour des marchandises compatibles qui sont autorisées pour le groupement et fixées à 100 fois le paramètre d'entrée le plus grand, dans lequel le résolveur hybride quantique, pour minimiser la valeur d'objet maintient une valeur de δ égale à « 0 » permettant uniquement à des marchandises compatibles d'être regroupées dans un même véhicule ; et
η représente une capacité de poids du véhicule et ζ représente une métrique de volume de capacité volumique du véhicule qui décident ensemble de la réduction d'espace vide dans un même véhicule.

3. Procédé mis en œuvre par processeur selon la revendication 1, dans lequel la pluralité de contraintes comprend :
deux marchandises incompatibles ou plus ne doivent pas être transportées ensemble dans un seul véhicule ;
chaque noeud est desservi par exactement un véhicule à exactement une étape de temps ;
un véhicule ne peut être qu'à un seul endroit à n'importe quelle étape de temps donnée ; et
une quantité totale de marchandise en termes de poids et de volume transportée par un véhicule dans son itinéraire entier ne dépasse pas sa capacité.

4. Système (102) pour la planification logistique, le système (102) comprenant :
un système informatique classique (102A), une mémoire (202) stockant des instructions ;
une ou plusieurs interfaces d'entrée/sortie (E/S) (206) ; et
un ou plusieurs processeurs matériels (204) couplés à la mémoire (202) via les une ou plusieurs interfaces E/S (206) ; et
un système informatique quantique (102B) couplé au système informatique classique (102A) comprenant des unités de traitement quantique (QPU),
dans lequel les un ou plusieurs processeurs matériels (204) sont configurés par les instructions pour :
diviser chaque emplacement de ramassage parmi une pluralité d'emplacements de ramassage en une pluralité de noeuds, dans lequel chaque emplacement de ramassage comprend des marchandises avec une combinaison de marchandises compatibles et de marchandises incompatibles devant être ramassées et transportées vers un centre de collecte, et dans lequel la division est déterminée sur la base (i) du nombre de marchandises incompatibles au niveau de l'emplacement de ramassage, (ii) d'une quantité de marchandise comprenant une quantité de poids et une quantité de volume au niveau de chaque emplacement, et (iii) d'une capacité médiane en termes de capacité de poids et de capacité de volume d'une pluralité de véhicules immatriculés pour le transport vers le centre de collecte ;
regrouper la pluralité de noeuds en une pluralité de grappes sur la base d'une distance géologique parmi les noeuds, dans lequel le regroupement est effectué si un nombre de la pluralité de noeuds dépasse un nombre de noeuds prédéfini, et dans lequel le nombre de grappes est limité par un rapport du nombre de la pluralité de noeuds au nombre de noeuds prédéfini, et des noeuds maximaux dans une grappe sont limités par le nombre de noeuds prédéfini ;
attribuer un ensemble de véhicules parmi la pluralité de véhicules à chaque grappe en utilisant un processus itératif jusqu'à ce qu'une demande de la quantité de chacune de la pluralité de grappes soit égale ou inférieure à une capacité d'un ou plusieurs véhicules attribués à chaque grappe, le processus itératif est appliqué sur (i) la pluralité de véhicules agencés dans un ordre décroissant de la capacité comprenant la capacité de poids et la capacité de volume, (ii) la pluralité de noeuds de chacune de la pluralité de grappes agencés dans un ordre décroissant de la quantité des une ou plusieurs marchandises au niveau de chaque noeud parmi la pluralité de noeuds, d'une demande de marché des une ou plusieurs marchandises disponibles au niveau de chacun des noeuds, et (iv) d'une différence entre la capacité du véhicule et la quantité des une ou plusieurs marchandises au niveau de chacun de l'ensemble de noeuds dans chaque grappe ;
créer un modèle d'optimisation défini par une valeur d'objet (O) pour chaque grappe sur la base d'une pluralité de paramètres d'entrée comprenant un nombre total de noeuds, un nombre total de l'ensemble de véhicules attribués à une grappe, une distance parmi l'ensemble de noeuds à l'intérieur de la grappe, une valeur de pénalité pour le groupement d'une paire de marchandises dans un seul véhicule, la demande de quantité de poids d'un noeud et la demande de quantité de volume d'un noeud pour la marchandise devant être ramassée à partir du noeud, la capacité de poids et la capacité de volume du véhicule, et des étapes de temps totales allouées pour achever le ramassage de la pluralité de marchandises, dans lequel la valeur d'objet est définie par la sommation d'une pluralité de variables de décision (α, β, γ , δ, η, ζ) ; et
dans lequel les QPU, exécutant un résolveur hybride quantique, sont configurées pour :
trouver un itinéraire optimal avec une utilisation de capacité optimale pour chaque véhicule parmi l'ensemble attribué de véhicules à l'intérieur de chaque grappe en résolvant le modèle d'optimisation sous une pluralité de contraintes pour minimiser la valeur d'objet, dans lequel l'itinéraire optimal spécifie un nombre de noeuds devant être visités et des étapes de temps associées pour chaque véhicule pour la planification logistique.

5. Système selon la revendication 4, dans lequel le résolveur hybride quantique minimise la valeur d'objet de chacune de la pluralité de variables de décision (α, β, γ , δ, η, ζ), et dans lequel
α représente une somme de distances parcourues par chaque véhicule de l'ensemble de véhicules d'un centre de collecte à un premier noeud dans des itinéraires respectifs de chaque véhicule ;
β représente la somme de distances parcourues par chaque véhicule du dernier noeud de l'itinéraire respectif au centre de collecte ;
y représente la somme de distances parcourues par chaque véhicule dans les étapes de temps intermédiaires ;
δ représente un terme de pénalité mis à jour par la valeur de pénalité selon que des marchandises compatibles ou incompatibles sont appariées dans un seul véhicule, dans lequel la valeur de pénalité est fixée à « 1 » pour des marchandises compatibles qui sont autorisées pour le groupement et fixées à 100 fois le paramètre d'entrée le plus grand, dans lequel le résolveur hybride quantique, pour minimiser la valeur d'objet maintient une valeur de δ égale à « 0 » permettant uniquement à des marchandises compatibles d'être regroupées dans un même véhicule ; et
η représente une capacité de poids du véhicule et ζ représente une métrique de volume de capacité volumique du véhicule qui décident ensemble de la réduction d'espace vide dans un même véhicule.

6. Système selon la revendication 4, dans lequel la pluralité de contraintes comprend :
deux marchandises incompatibles ou plus ne doivent pas être transportées ensemble dans un seul véhicule ;
chaque noeud est desservi par exactement un véhicule à exactement une étape de temps ;
un véhicule ne peut être qu'à un seul endroit à n'importe quelle étape de temps donnée ; et
une quantité totale de marchandise en termes de poids et de volume transportée par un véhicule dans son itinéraire entier ne dépasse pas sa capacité.

7. Un ou plusieurs supports de stockage d'informations lisibles par machine non transitoires comprenant une ou plusieurs instructions qui, lorsqu'elles sont exécutées par un ou plusieurs processeurs matériels d'un système informatique classique en combinaison avec des unités de traitement quantique, amènent :
la division de chaque emplacement de ramassage parmi une pluralité d'emplacements de ramassage en une pluralité de noeuds, dans lequel chaque emplacement de ramassage comprend des marchandises avec une combinaison de marchandises compatibles et de marchandises incompatibles devant être ramassées et transportées vers un centre de collecte, et dans lequel la division est déterminée sur la base (i) du nombre des marchandises incompatibles au niveau de l'emplacement de ramassage, (ii) d'une quantité de marchandise comprenant une quantité de poids et une quantité de volume au niveau de chaque emplacement, et (iii) d'une capacité médiane en termes de capacité de poids et de capacité de volume d'une pluralité de véhicules immatriculés pour le transport vers le centre de collecte ;
le regroupement de la pluralité de noeuds en une pluralité de grappes sur la base d'une distance géologique parmi les noeuds, dans lequel le regroupement est effectué si un nombre de la pluralité de noeuds dépasse un nombre de noeuds prédéfini, et dans lequel le nombre de grappes est limité par un rapport du nombre de la pluralité de noeuds au nombre de noeuds prédéfini, et des noeuds maximaux dans une grappe sont limités par le nombre de noeuds prédéfini ;
l'attribution d'un ensemble de véhicules parmi la pluralité de véhicules à chaque grappe en utilisant un processus itératif jusqu'à ce qu'une demande de la quantité de chacune de la pluralité de grappes soit égale ou inférieure à une capacité d'un ou plusieurs véhicules attribués à chaque grappe, le processus itératif est appliqué sur (i) la pluralité de véhicules agencés dans un ordre décroissant de la capacité comprenant la capacité de poids et la capacité de volume, (ii) la pluralité de noeuds de chacune de la pluralité de grappes agencés dans un ordre décroissant de la quantité des une ou plusieurs marchandises au niveau de chaque noeud parmi la pluralité de noeuds, d'une demande de marché des une ou plusieurs marchandises disponibles au niveau de chacun des noeuds, et (iv) d'une différence entre la capacité du véhicule et la quantité des une ou plusieurs marchandises au niveau de chacun de l'ensemble de noeuds dans chaque grappe ;
la création d'un modèle d'optimisation défini par une valeur d'objet (O) pour chaque grappe sur la base d'une pluralité de paramètres d'entrée comprenant un nombre total de noeuds, un nombre total de l'ensemble de véhicules attribués à une grappe, une distance parmi l'ensemble de noeuds à l'intérieur de la grappe, une valeur de pénalité pour le groupement d'une paire de marchandises dans un seul véhicule, la demande de quantité de poids d'un noeud et la demande de quantité de volume d'un noeud pour la marchandise devant être ramassée à partir du noeud, la capacité de poids et la capacité de volume du véhicule, et des étapes de temps totales allouées pour achever le ramassage de la pluralité de marchandises, dans lequel la valeur d'objet est définie par la sommation d'une pluralité de variables de décision (α, β, γ , δ, η, ζ) ; et
la recherche d'un itinéraire optimal avec une utilisation de capacité optimale pour chaque véhicule parmi l'ensemble attribué de véhicules à l'intérieur de chaque grappe en résolvant le modèle d'optimisation sous une pluralité de contraintes pour minimiser la valeur d'objet en utilisant un résolveur hybride quantique exécuté par des unités de traitement quantique (QPU) d'un système informatique quantique, dans lequel l'itinéraire optimal spécifie un nombre de noeuds devant être visités et des étapes de temps associées pour chaque véhicule pour la planification logistique.

8. Un ou plusieurs supports de stockage d'informations lisibles par machine non transitoires selon la revendication 7, dans lequel le résolveur hybride quantique minimise la valeur d'objet de chacune de la pluralité de variables de décision (α, β, γ , δ, η, ζ), et dans lequel
α représente une somme de distances parcourues par chaque véhicule de l'ensemble de véhicules d'un centre de collecte à un premier noeud dans des itinéraires respectifs de chaque véhicule ;
β représente la somme de distances parcourues par chaque véhicule du dernier noeud de l'itinéraire respectif au centre de collecte ;
y représente la somme de distances parcourues par chaque véhicule dans les étapes de temps intermédiaires ;
δ représente un terme de pénalité mis à jour par la valeur de pénalité selon que les marchandises compatibles ou les marchandises incompatibles sont appariées dans un seul véhicule, dans lequel la valeur de pénalité est fixée à « 1 » pour des marchandises compatibles qui sont autorisées pour le groupement et fixées à 100 fois le paramètre d'entrée le plus grand, dans lequel le résolveur hybride quantique, pour minimiser la valeur d'objet maintient une valeur de δ égale à « 0 » permettant uniquement à des marchandises compatibles d'être regroupées dans un même véhicule ; et
η représente une capacité de poids du véhicule et ζ représente une métrique de volume de capacité volumique du véhicule qui décident ensemble de la réduction d'espace vide dans un même véhicule.

9. Un ou plusieurs supports de stockage d'informations lisibles par machine non transitoires selon la revendication 7, dans lequel la pluralité de contraintes comprend :
deux marchandises incompatibles ou plus ne doivent pas être transportées ensemble dans un seul véhicule ;
chaque noeud est desservi par exactement un véhicule à exactement une étape de temps ;
un véhicule ne peut être qu'à un seul endroit à n'importe quelle étape de temps donnée ; et
une quantité totale de marchandise en termes de poids et de volume transportée par un véhicule dans son itinéraire entier ne dépasse pas sa capacité.
